Europäisches Patentamt

European Patent Office

Office européen des brevets

(11) Publication number: **0 004 698**
**B1**

# EUROPEAN PATENT SPECIFICATION

(45) Date of publication of patent specification: **26.08.81**

(51) Int. Cl.³: **A 47 K  11/02**

(21) Application number: **79300197.5**

(22) Date of filing: **09.02.79**

(54) **Portable toilet with vent means for the holding tank.**

(30) Priority: **03.04.78 US 892762**

(43) Date of publication of application:
**17.10.79 Bulletin 79/21**

(45) Publication of the grant of the European patent:
**26.08.81 Bulletin 81/34**

(84) Designated Contracting States:
**BE DE FR GB NL SE**

(56) References cited:
**FR - A - 1 089 995**
**FR - A - 1 593 455**
**FR - A - 2 216 967**
**FR - A - 2 226 206**
**US - A - 2 680 249**

(73) Proprietor: **THETFORD CORPORATION**
**7101 Jackson Road**
**Ann Arbor Michigan 48103 (US)**

(72) Inventor: **Sargent, Frank Thomas**
**1845 Landsdown**
**Ann Arbor Michigan 48105 (US)**
Inventor: **Antos, John Michael**
**2115 Windsor Drive**
**Ann Arbor Michigan 48103 (US)**
Inventor: **Lindsay, Erin Jessica**
**2023 Medford**
**Ann Arbor Michigan 48104 (US)**

(74) Representative: **Barlow, Roy James et al,**
**J.A.KEMP & CO. 14, South Square Gray's Inn**
**London WC1R 5EU (GB)**

Courier Press, Leamington Spa, England.

# Portable toilet with vent means for the holding tank

The present invention relates to portable toilets of the types disclosed in United States Patents Nos. 3,570,018 and 3,949,430, and is particularly directed to improvements in toilets of this character.

Portable toilets of the type disclosed in the above cited patents are used extensively for the purposes of travel and recreation. Detachable holding tanks are provided which are closed in a sealed condition when the toilets are not in use. The pressure within the closed holding tank may deviate from the ambient pressure for various reasons, for example by travelling from a low to a high altitude, or *vice versa,* or when chemical reaction occurs within the holding tank. Pressure differentials of this nature can create problems for the user of the portable toilet. For example, if a portable toilet has last been used at sea level, where the atmospheric pressure is relatively high, and the toilet is then transported in sealed condition to a recreational area in the mountains where the atmoshperic pressure may be lower, a pressure differential may have been created because the pressure in the sealed holding tank will have remained essentially that which existed when the holding tank was closed at sea level. If a liquid, such as a chemical deodorant, for example, is now to be introduced into the toilet bowl for discharge into the holding tank through the valve between the toilet bowl and the holding tank, a jetlike gaseous discharge from the holding tank up through the liquid in the bowl may occur as the valve blade is initially opened, causing upward spray of the liquid. Similarly, problems may occur if the contents of the holding tank are to be evacuated when the pressure within the holding tank is greater than the current ambient pressure.

Efforts have been made to relieve problems associated with differentials between holding tank pressures and ambient pressure in portable toilets of the types, for example as disclosed in United States Patents Nos. 3,747,130, and 4,032,996 but successful solutions to this problem have not been provided in portable toilets of the type where a detachable holding tank is utilised.

The rather more squat toilet of the type having a holding tank on which the toilet seat and flushing mechanism are releasably mounted, simplifies the emptying operation but has the closure valve operating mechanism much lower in the holding tank and therefore nearer the surface of the contents of the holding tank than in U.S. Patent No. 3,747,130 where the operating arm is upwardly inclined to follow the contours of the toilet bowl with the vent valve near the operating handle at the top of the tank. Employing this arrangement in a "separable holding tank" type of toilet would be unacceptable in that the actuating handle for the main valve plate passes through the tank wall low down near the surface of the contents of the holding tank and would, together with the vent port and closure element, be subject to fouling and corrosion.

According to the present invention there is provided a separable vertically stacked two-part portable toilet comprising an upper section defining one part with a bottom wall and a toilet bowl having at its bottom a discharge outlet opening through said bottom wall; a waste holding tank defining the other part and being vertically stacked below and detachably connected to said upper section and including a horizontal top wall with an inlet port for receiving waste from the discharge outlet of said toilet bowl; and a valve assembly mounted on said top wall and including a plate for horizontal movement to an open position to open said inlet port to provide communication with said discharge outlet and to a closed position to close the inlet port so as to retain the waste in the holding tank in a sealed relation, characterised by a vent port located in said horizontal top wall of said holding tank in juxtaposition with said valve assembly, said valve assembly also including a movable vent port closure element mechanically connected to said plate of the valve assembly and immovable with respect thereto so that valve-opening and valve-closing movements of the plate cause the vent port closure element to open said vent port immediately prior to the opening of said inlet port and to close said vent port after the closing of said inlet port.

By arranging the vent port in the top wall of the holding tank and mechanically connecting the vent port closure element to the plate of the valve assembly, it has been ensured that the toilet in accordance with the present invention has the vent port at all times shielded by its closure element positioned horizontally therebelow, and thus (in the closed position) the closure element and the vent port can be well clear of the point of emergence of the operating handle through the side wall of the holding tank to allow for adequate sealing or shrouding of the operating handle.

This invention will more readily be understood from the following description, giving with reference to the accompanying drawings, in which:—

Figure 1 is a fragmentary top plan view of a holding tank embodying the present invention;

Figure 2 is a vertical section taken on the lines 2—2 of Figure 1 showing the holding tank attached to the upper section of a portable toilet;

Figure 3 is an enlarged fragmentary section taken vertically through the vent port means, also on the line 2—2 of Figure 1; and

Figure 4 is a fragmentary sectional view similar to that of Figure 3, but showing a modified form of the vent port means.

It is to be understood that the invention is not limited in its application to the details of construction and arrangement of parts exemplified in the following description and in the accompanying drawings, since the invention is capable of various other embodiments within the scope of the claims of this application. Also, it is to be understood that the phraseology or terminology employed herein is for the purpose of description and not of limitation.

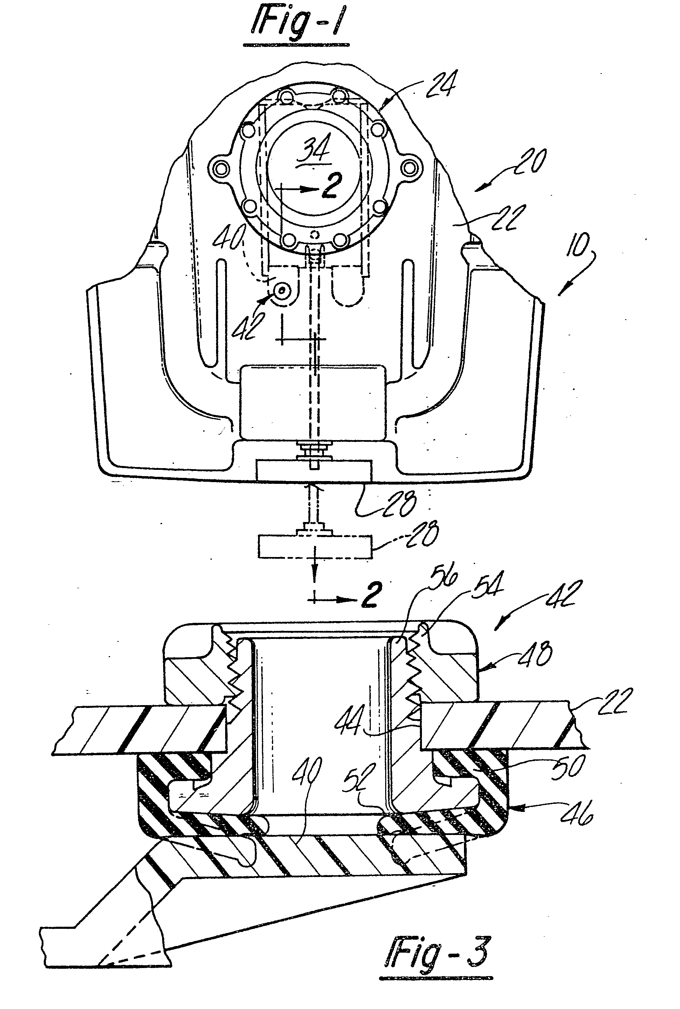

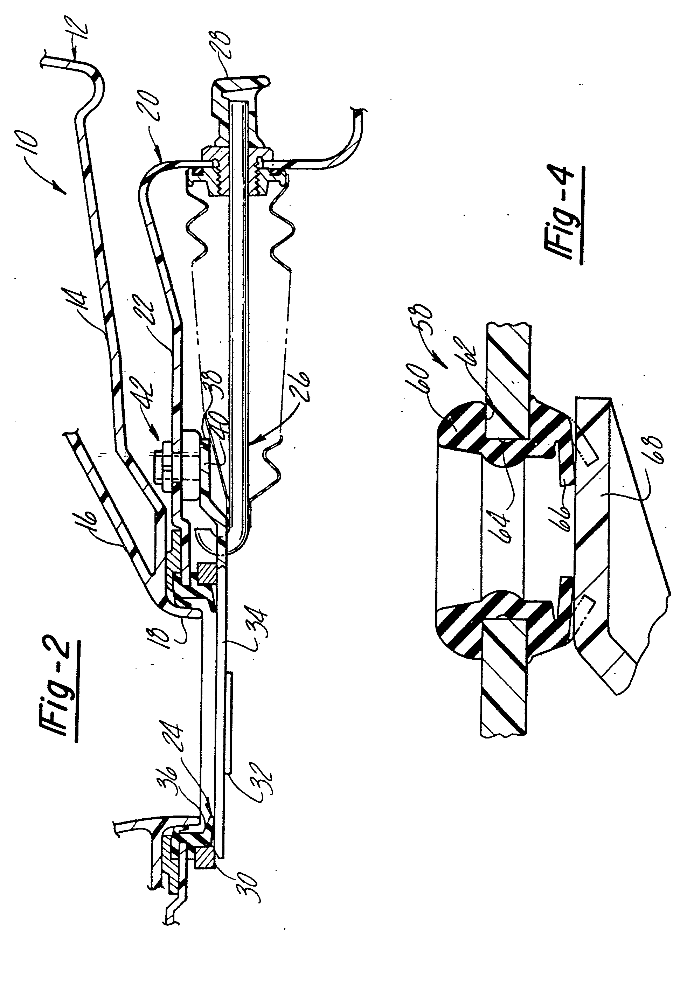

The portable toilet 10 shown in Figures 1 and 2 may be constructed essentially the same as that which is illustrated and described in our said United States Patent No. 3,949,430, and for a more detailed description of the construction of the portable toilet, reference is made to this patent. As shown in Figure 1, the portable toilet 10 has an upper section 12 which includes a bottom wall 14 and which also defines a toilet bowl 16 having an outlet port 18 at its bottom. A detachable waste holding tank 20 is provided, having a top wall 22 in which is located an inlet port 24 for receiving waste from the toilet bowl 16. A valve assembly 26 is mounted on said top wall 22 for movement to an open position (as indicated by the phantom lines illustration of the handle 28 in Figure 1) and to a position to close the inlet port (as shown in solid lines in Figure 1), so as to retain the waste sealed in the holding tank 20.

As is explained in greater detail in our United States Patent No. 3,949,430, the inlet port 24 includes vertically spaced guide surfaces formed on guide members of which only members 30 and 32 are shown, which serve to guide the movement of the flat valve gate or blade 34 connected to the handle 28 of the valve assembly 26. Other vertically spaced guide means, not shown, are also used for this purpose, and again reference is made to our United States Patent No. 3,949,430 for a description of the additional guide means which may be utilised. By virtue of the described construction, when the blade 34 is in the position illustrated in Figure 2 a closed and sealed inlet port for the tank is provided, because the elastomeric seal ring 36 engages the top surface of the blade 34.

In the form of the invention illustrated in the drawings, the blade 34 has an offset portion 38 which defines a closure element 40. As shown in detail in Figure 3, this closure element cooperates with a vent port 42 located in the top wall 22 and including the port hole 44 and the elastomeric seal 46 mounted adjacent to the port hole by the attachment means 48. The elastomeric seal has a body portion 50 secured by the attachment means 48 to the wall 22 and has a lip 52 that normally extends into the path of travel of the closure element 40, and will be moved from its unstressed, broken line position to its closed solid line position by movement of the closure element 40 to the closed position of valve assembly 26. In this embodiment of the invention, the attachment means 48 is a conventional bulkhead nut 54 which is threadedly connected to a conventional bulkhead fitting 56 for clampingly engaging the body portion 50 and top wall 22.

When the valve assembly 26 is in its closed position, as shown in Figure 2, the blade 34 closes the inlet port 24 in a sealed relation, while the closure element 40 similarly holds the vent port 42 sealed. When the valve assembly 26 is initially moved toward an open position, by pulling on the handle 28, the closure element 40 will open the vent port 42 immediately prior to opening the inlet port 24 by the blade 34. Thus, venting of the holding tank 20 will occur while the blade 34 is still in a sealed relation with respect to the inlet port 24.

If the pressure of the gases in the holding tank 20 exceeds ambient air pressure, venting will occur through the vent port 42, and the discharged gases will merely impinge upon the bottom wall 14 of the upper section 12. Similarly, when the valve assembly 26 is returned to its closed position, the closure element 40 will close the vent port 42 immediately after the blade 34 has closed the inlet port 24.

It will be understood that the specific construction of the vent port 42 is not essential to the operation of the invention, but other arrangements can be used. Such an alternative arrangement is illustrated in Figure 4 where the vent port 58 is an elastomeric seal or grommet in the form of a unitary annulus with a body portion 60 that has a groove 62 around its outer periphery to receive the inner edge of the port hole 64. Furthermore the annulus has a lip 66 that extends from the body portion into the path of movement of the closure element 68. In other respects, this form of the vent port functions in the same way as the vent port 42 illustrated in the embodiment of Figures 1 to 3.

## Claims

1. A separable vertically stacked two-part portable toilet (10) comprising an upper section (12) defining one part with a bottom wall (14) and a toilet bowl (16) having at its bottom a discharge outlet (18) opening through said bottom wall; a waste holding tank (20) defining the other part and being vertically stacked below and detachably connected to said upper section and including a horizontal top wall (22) with an inlet port (24) for receiving waste from the discharge outlet of said toilet bowl; and a valve assembly (26) mounted on said top wall and including a plate (34) for horizontal movement to an open position to open said inlet port to provide communication with said discharge outlet and to a closed position to close the inlet port so as to retain the waste in the holding tank in a sealed relation, characterised by a vent port (42) located in said horizontal top wall (22) of said holding tank (20) in juxtaposition with said valve assembly (26) and adjacent to said inlet port (24) under said bottom wall (14) and spaced therefrom, said valve assembly also including a movable vent port closure element (40) mechanically connected to said plate (34) of the valve assembly and immovable with respect thereto so that valve-opening and closing movements of the plate cause the vent port closure element (40) to open said vent port (42) immediately prior to the opening of said inlet port (24) and to close said vent port after the closing of said inlet port.

2. A portable toilet according to claim 1, characterised in that said vent port (42) includes a port hole (44) in said top wall (22), and an elastomeric seal (46) (60) which extends into the path of travel of said closure element (40) for sealing engagement with the closure element.

3. A portable toilet according to claim 2, characterised in that said elastomeric seal (46) (60) is mounted adjacent to said port hole, (44) and in that said sealing engagement involves displacement of a portion (52) (66) of said elastomeric seal into sealed relation with said closure element (40) when the closure element is in its closed position.

4. A portable toilet according to claim 2 or 3, characterised in that said plate (34) is supported for sliding movement across said inlet port (24), and said closure element (40) is an offset portion of said plate (34) which is offset a sufficient amount to engage said elastomeric seal (46) (60) during movements of said plate.

5. A portable toilet according to claim 2, 3 or 4, characterised in that said elastomeric seal is an annulus (60) which has a body portion with around its outer periphery a groove (62) in which the inner edge (64) of said port hole is seated, and the annulus has a lip (66) which extends from the body portion into the path of movement of said closure element.

6. A portable toilet according to claim 2, 3 or 4, characterised in that said elastomeric seal is an annulus (46) that has a body portion (50) with a lip (52) which extends from the body portion into the path of movement of said closure element; and in that an attachment means (48) is mounted on the inner edge of said port hole (44) and retains said body portion in place.

7. A portable toilet according to any one of the preceding claims, characterised in that said valve plate (34) is located within said holding tank (20) and said holding tank has therein vertically spaced guide surfaces (30, 32) between which said valve plate (34) is movable.

8. A portable toilet according to any one of the preceding claims, characterised in that the movable vent port closure element (40) is integrally connected to the said plate (34) of the valve assembly, and in that the actuating rod is formed separately from said valve plate (34) but linked thereto.

**Revendications**

1. Toilettes portatives (10) séparables en deux éléments juxtaposés verticalement, comprenant une partie supérieure (12) définissant un élément avec une paroi inférieure (14) et une cuvette de toilettes (16) ayant à sa base un orifice de décharge (18) traversant ladite paroi inférieure; un récipient de rétention des déchets (20) définissant l'autre élément et étant juxtaposé verticalement en-dessous de ladite partie supérieure et relié de façon détachable à cette dernière et comprenant une paroi supérieure horizontale (22) avec un orifice d'entrée (24) destiné à recevoir les déchets provenant de l'orifice de décharge de ladite cuvette de toilettes; et un dispositif d'obturation (26) monté sur ladite paroi supérieure et comprenant une plaque (34) déplaçable horizontalement dans une position ouverte pour ouvrir ledit orifice d'entrée afin de constituer une communication avec ledit orifice de déchage et dans une position fermée pour fermer l'orifice d'entrée de façon à assurer le maintien étanche des déchets à l'intérieur du récipient de rétention, caractérisées par un orifice de purge (42) situé dans ladite paroi supérieure horizontale (22) dudit récipient de rétention (20) en juxtaposition avec ledit dispositif d'obturation (26) et de façon adjacente audit orifice d'entrée (24) sous ladite paroi inférieure (14) et espacé de cette dernière, ledit dispositif d'obturation comprénant également un élément de fermeture mobile (40) de l'orifice de purge mécaniquement relié à ladite plaque (34) du dispositif d'obturation et ne pouvant pas se déplacer par rapport à elle, de sorte que les mouvements de fermeture et d'ouverture de la plaque d'obturateur entraînent l'élément de fermeture de l'orifice de purge à ouvrir ledit orifice de purge (42) immédiatement avant l'ouverture dudit orifice d'entrée (24) et à fermer ledit orifice de purge aprés la fermeture dudit orifice d'entrée.

2. Toilettes portatives selon la revendication 1, caractérisées par le fait que ledit orifice de purge (42) comprend un trou (44) ménagé dans ladite paroi supérieure (22) et un joint élastomère (46) (60) qui s'étend dans la trajectoire de déplacement dudit élément de fermeture (40) pour un contact étanche avec l'élément de fermeture.

3. Toilettes portatives selon la revendication 2, caractérisées par le fait que ledit joint élastomère (46) (60) est monté adjacent audit trou (44) et que ledit contact étanche implique le déplacement d'une partie (52) (66) dudit joint élastomère dans une relation étanche avec ledit élément de fermeture (40) lorsque l'élément de fermeture se trouve en position fermée.

4. Toilettes portatives selon l'une des revendications 2 ou 3, caractérisées par le fait que ladite plaque (34) est montée de façon à coulisser à travers l'orifice d'entrée (24) et que ledit élément de fermeture (40) constitue une partie saillante de ladite plaque (34) qui fait suffisamment saillie pour pouvoir venir en contact avec ledit joint élastomère (46) (60) pendant les mouvements de ladite plaque.

5. Toilettes portatives selon les revendications 2, 3 ou 4, caractérisées par le fait que ledit joint élastomère est un anneau (60) présentant une portion de corps à la périphérie extérieure de laquelle est pratiquée une rainure (62) à l'intérieur de laquelle est monté le bord intérieur (64) dudit trou et que l'anneau a une lèvre (66) qui s'étend à partir de la portion de corps dans la trajectoire de déplacement dudit élément de fermeture.

6. Toilettes portatives selon les revendications 2, 3 ou 4, caractérisées par le fait que ledit joint élastomère consiste en un anneau (46) présentant une portion de corps (50) avec une lèvre (52) qui s'étend à partir de la portion de corps dans la trajectoire de déplacement dudit élément de fermeture; et que des moyens d'attache (48) sont montés sur le bord intérieur dudit trou (44) et maintiennent en place ledit corps.

7. Toilettes portatives selon l'une quelconque des revendications précédentes, caractérisées par le fait que ladite plaque d'obturateur (34) est disposée à l'intérieur dudit récipient de rétention (20) et que ledit récipient de rétention comporte intérieurement des parois de guidage espacées verticalement (30, 32) entre lesquelles peut être déplacée ladite plaque d'obturateur (34).

8. Toilettes portatives selon l'une quelconque des revendications précédentes, caractérisées par le fait que l'élément de fermeture mobile (40) de l'orifice de purge est relié à ladite plaque (34) du dispositif d'obturation de façon à faire partie intégrante de cette dernière, et que la tige de manoeuvre (26) est réalisée séparément de ladite plaque (34) mais est liée à cette dernière.

**Patentansprüche**

1. Tragbares Klosett mit zwei übereinander angeordneten voneinander trennbaren Teilen, von denen das Oberteil eine Klosettschüssel und eine Bodenwand mit einer in deren boden vorgesehenen Auslaßöffnung, und das mit dem Oberteil lösbar verbundene Unterteil einen Fäkalienbehälter mit einer horizontalen oberen Wand und darin vorgesehener Einlaßöffnung für Fäkalien bilden, und mit einer auf der oberen Wand des Fäkalienbehälters befestigten Ventilanordnung, die eine horizontal in eine Offenstellung und in eine Schließstellung verstellbare Ventilplatte aufweist, in deren Offenstellung die Einlaßöffnung mit der Auslaßöffnung verbunden ist und in deren Schließstellung die Einlaßöffnung und damit der Fäkalienbehälter abgedichtet verschlossen sind, dadurch gekennzeichnet, daß in der oberen Wand (22) des Fäkalienbehälters (20) neben der Ventilanordnung (26), in der Nähe der Einlaßöffnung (24) und im Abstand unterhalb der Bodenwand (14) des Oberteils (12) eine Belüftungsöffnung (42) ausgebildet ist, und daß die Ventilanordnung (26) ein Verschlußelement (40) für die Belüftungsöffnung (42) aufweist, das mit der Ventilplatte (34) mechanisch verbunden und relativ zu dieser unbeweglich derart angeordnet ist, daß die Belüftungsöffnung (42) bei der Verstellung der Ventilplatte (34) in die Offenstellung unmittelbar vor der Freigabe der Einlaßöffnung (24) geöffnet und bei der Verstellung der Ventilplatte (34) in die Schließstellung nach dem Schließen der Einlaßöffnung (24) verschlossen wird.

2. Klosett nach Anspruch 1, dadurch gekennzeichnet, daß die Belüftungsöffnung (42) durch einen Durchbruch (44) in der oberen Wand (22) und durch eine Elastomerdichtung (46, 60) gebildet ist, die in die Bewegungsbahn des Verschlußelements (40) hineinragt und mit diesem in Dichtkontakt kommt.

3. Klosett nach Anspruch 2, dadurch gekennzeichnet, daß die Elastomerdichtung (46, 60) nahe an dem Durchbruch (44) angeordnet ist und einen verstellbaren Dichtungsabschnitt (52, 66) aufweist, der beim Dichtkontakt mit dem Verschlußelement (40) in eine Dichtstellung verstellt ist.

4. Klosett nach Anspruch 2 oder 3, dadurch gekennzeichnet, daß die Ventilplatte (34) quer zur Einlaßöffnung (24) verschieblich gelagert ist, und daß das Verschlußelement (40) ein gegenüber der Ventilplatte (34) versetzter Teil der Ventilplatte selbst ist, der bei der Bewegung der Ventilplatte mit der Elastomerdichtung in Dichtkontakt kommt.

5. Klosett nach Anspruch 2, 3 oder 4, dadurch gekennzeichnet, daß die Elastomerdichtung (60) ein Ring mit einem Ringkörper ist, der eine außen umlaufende Nut (62) zur Aufnahme des Innenrandes (64) des Durchbruchs (44) aufweist, und daß der Ringkörper eine in die Bewegungsbahn des Verschlußelements (40) ragende Dichtlippe (66) hat.

6. Klosett nach Anspruch 2, 3 oder 4, dadurch gekennzeichnet, daß die Elastomerdichtung (46) ein Ring mit einem Ringkörper (50) und mit einer in die Bewegungsbahn des Verschlußelements (40) ragenden Dichtlippe (52) ist, und daß der Ringkörper (50) durch eine am Innenrand des Durchbruchs (44) befestigte Halteeinrichtung (48) gehalten ist.

7. Klosett nach einem der vorhergehenden Ansprüche, dadurch gekennzeichnet, daß die Ventilplatte (34)· innerhalb des Fäkalienbehälters (20) angeordnet und zwischen vertikal beabstandeten Führungsflächen (30, 32) des Fäklienbehälters geführt ist.

8. Klosett nach einem der vorhergehenden Ansprüche, dadurch gekennzeichnet, daß das bewegliche Verschlußelement (40) einstückig

**0 004 698**

mit der Ventilplatte (34) ist, und eine Betätigungsstange der Ventilanordnung (26) ein von der Ventilplatte (34) gesondertes, jedoch damit gelenkig verbundenes Teil bildet.

0 004 698.

## Fig-1

## Fig-3

_Fig-2_

_Fig-4_